# EUROPÄISCHE PATENTSCHRIFT

(11) **EP 2 156 039 B1**
(45) Veröffentlichungstag und Bekanntmachung des Hinweises auf die Patenterteilung: **17.11.2010**
(21) Anmeldenummer: 08718133.5
(22) Anmeldetag: 20.03.2008
(51) Int. Cl.: F02D 41/40, F02D 41/14, F02D 41/00

(54) **VERFAHREN UND VORRICHTUNG ZUR ERMITTLUNG DES VERBRENNUNGS-LAMBDAWERTS EINER BRENNKRAFTMASCHINE**
METHOD AND DEVICE FOR DETERMINING THE COMBUSTION LAMBDA VALUE OF AN INTERNAL COMBUSTION ENGINE
PROCÉDÉ ET DISPOSITIF DE DÉTERMINATION DE LA VALEUR LAMBDA DE COMBUSTION D'UN MOTEUR À COMBUSTION INTERNE

(30) Priorität: 07.05.2007 DE 102007021283
(43) Veröffentlichungstag der Anmeldung: 24.02.2010
(73) Patentinhaber: Continental Automotive GmbH, 30165 Hannover (DE)
(72) Erfinder: HACKER, Frank, 93128 Regenstauf (DE); HAFT, Gerhard, 94345 Obermotzing (DE)
(86) Internationale Anmeldenummer: PCT/EP2008/053427
(87) Internationale Veröffentlichungsnummer: WO 2008/135312

(56) Entgegenhaltungen:
- EP-A- 1 729 001
- DE-A1- 19 735 454
- DE-A1- 19 911 019
- DE-B3- 10 304 242
- US-A1- 2002 043 247
- US-B1- 7 027 910

## Beschreibung

Verfahren und Vorrichtung zur Ermittlung des Verbrennungs-Lambdawerts einer Brennkraftmaschine

Die Erfindung betrifft ein Verfahren zur Ermittlung des Verbrennungs-Lambdawerts einer Brennkraftmaschine sowie eine Steuervorrichtung, welche derart ausgebildet ist, dass sie das Verfahren ausführen kann.

Zur Einhaltung immer strengerer Abgasvorschriften sind die meisten Kraftfahrzeuge heutzutage mit einem Abgasreinigungskatalysator ausgestattet. Der optimale Reinigungs-Wirkungsgrad des Katalysators wird jedoch nur bei einem bestimmten Luft/Kraftstoffverhältnis des Brenngemisches erreicht. Zur Einstellung des Luft/Kraftstoffverhältnisses ist im Abgasstrang des Kraftfahrzeuges zumindest eine Lambdasonde angeordnet. Lambdasonden weisen jedoch eine Reihe von Nachteilen auf.

So ist ein verlässliches Signal der Lambdasonde erst nach Erreichen der Betriebstemperatur von ca. 800 bis 900° C erhältlich. Die Lambdasonde muss daher nach dem Start der Brennkraftmaschine mittels einer eigens vorgesehenen Heizung erst auf diese Betriebstemperatur erhitzt werden. Bis zum Erreichen der Betriebstemperatur ist daher eine Regelung des Luft/Kraftstoffverhältnisses nicht möglich, was zu einem erhöhten Schadstoffausstoß während der Warmlaufphase führt.

Bei Verwendung von preisgünstigen, binären Lambdasonden ist ferner die Ermittlung eines definierten Lambdawertes des Abgases nicht möglich, da eine binäre Sonde nur eine qualitative Aussage über die Zusammensetzung des Abgases zulässt. Lineare Lambdasonden erlauben zwar eine quantitative Bestimmung des Verbrennungs-Lambdawerts, sind jedoch deutlich teuerer als binäre Lambdasonden.

Bei Kraftfahrzeugen, welche wahlweise mit verschiedenen Kraftstoffsorten, wie beispielsweise Benzin und Alkohol, betrieben werden können, kann der Verbrennungs-Lambdawert mittels einer Lambdasonde in der Regel nur bei Betrieb mit einer der beiden Kraftstoffsorten ermittelt werden.

Die US 2002/04 3247 offenbart ein verfahren zur Ermittlung des Lambdawerts aus der Drehzahl und der Drehzahlerhöhung einer Brennkraftmaschine mit mindestens zwei Brennräumen.

Wie aus obiger Darstellung hervorgeht, ist der Einsatz von Lambdasonden mit starken Restriktionen verbunden.

Es ist deshalb die Aufgabe der vorliegenden Erfindung eine Vorrichtung und ein Verfahren bereitzustellen, mittels denen eine Bestimmung des Verbrennungs-Lambdawerts einer Brennkraftmaschine auch ohne Einsatz einer Lambdasonde möglich ist.

Diese Aufgabe wird durch das Verfahren und die Vorrichtung gemäß den unabhängigen Ansprüchen gelöst. Vorteilhafte Ausgestaltungen der Erfindung sind Gegenstand der abhängigen Ansprüche.

Ein Verfahren gemäß dem Anspruch 1 bezieht sich auf eine Brennkraftmaschine mit mindestens zwei Brennräumen. Danach wird dem ersten Brennraum eine vorgegebene erste Kraftstoffmenge und dem zweiten Brennraum eine vorgegebene zweite Kraftstoffmenge zugemessen. Die erste Kraftstoffmenge wird um einen vorgegebenen Betrag verringert und die zweite Kraftstoffmenge um den gleichen vorgegebenen Betrag erhöht. Dadurch bleibt die Summe aus dem ersten und dem zweiten Brennraum zugeführten Kraftstoffmengen im Wesentlichen konstant. Anschließend wird ein erster Laufunruhewert, welcher dem ersten Brennraum zugeordnet ist, und ein zweiter Laufunruhewert, welcher dem zweiten Brennraum zugeordnet ist, ermittelt. Der Verbrennungs-Lambdawert wird dann basierend auf dem ersten Laufunruhewert und dem zweiten Laufunruhewert ermittelt.

Das in jedem Brennraum erzeugte Drehmoment ist abhängig von dem brennraum-individuellen Luft/Kraftstoffverhältnis. Bekannte Verfahren erlauben die Bestimmung einer brennraum-individuellen Laufunruhe der Brennkraftmaschine, welche durch die unterschiedlichen Drehmomentbeiträge der einzelnen Brennräume der Brennkraftmaschine zustande kommt. Ein derartiges Verfahren ist beispielsweise in der EP 0 576 705 A1 beschrieben. Ein Laufunruhewert im Sinne der Erfindung ist daher jeder Wert, welcher ein Maß für den individuellen Drehmomentbeitrag der einzelnen Brennräume darstellt. Wird eine bestimmte Kraftstoffmenge auf die Brennräume der Brennkraftmaschine verteilt, so ergibt sich durch die Verbrennung dieser Kraftstoffmenge ein zunächst unbekannter Verbrennungs-Lambdawert. Wird nun die brennraum-individuelle Kraftstoffmenge eines der Brennräume um einen vorgegebenen Betrag reduziert und gleichzeitig die brennraum-individuelle Kraftstoffmenge eines anderen Brennraums um den gleichen Betrag erhöht, so sind die Drehmomentbeiträge der Brennräume aufgrund der unterschiedlichen brennraum-individuellen Luft/Kraftstoffverhältnisse verschieden groß. Diese unterschiedlichen Drehmomentbeiträge führen zu unterschiedlichen Laufunruhewerten für jeden Brennraum. Das Muster der brennraum-individuellen Laufunruhewerte ist jedoch charakteristisch für einen bestimmten Verbrennungs-Lambdawert. Eine entsprechende Auswertung der brennraum-individuellen Laufunruhewerte erlaubt daher einen Rückschluss auf den Verbrennungs-Lambdawert. Durch diese Verfahren ist es möglich, den Verbrennungs-Lambdawert der Brennkraftmaschine ohne Verwendung einer Lambdasonde zu bestimmen. Dadurch ergibt sich eine wesentlich flexiblere und kostengünstigere Methode zur Bestimmung des Lambdawertes.

In einer Ausgestaltung des Verfahrens nach Anspruch 2 wird der Verbrennungs-Lambdawert basierend auf dem Unterschied zwischen dem ersten Laufunruhewert und dem zweiten Laufunruhewert ermittelt.

Durch Ermittlung des Unterschieds zwischen dem ersten Laufunruhewert und dem zweiten Laufunruhewert kann das Verhältnis der beiden Laufunruhewerte zueinander leicht dargestellt werden. Dies vereinfacht die Bestimmung des Lambdawertes, beispielsweise unter Verwendung von Kennfeldern.

In einer Ausgestaltung des Verfahrens nach Anspruch 3 wird nach Ermittlung des ersten Laufunruhewerts und des zweiten Laufunruhewerts die erste Kraftstoffmenge um den vorgegebenen Betrag erhöht und die zweite Kraftstoffmenge um den vorgegebenen Betrag verringert. Anschließend wird ein dritter Laufunruhewert, welcher dem ersten Brennraum zugeordnet ist, und ein vierter Laufunruhewert, welcher dem zweiten Brennraum zugeordnet ist, ermittelt. Der Verbrennungs-Lambdawert wird dann basierend auf dem ersten, zweiten, dritten und vierten Laufunruhewert ermittelt.

Diese Ausgestaltung des Verfahrens erweist sich insbesondere dann als vorteilhaft, wenn die den Brennräumen zugemessenen Kraftstoffmengen aufgrund einer brennraum-individuellen Kraftstoffmengenanpassung unterschiedlich groß sind. Bekannte Verfahren ermöglichen es, die den Brennräumen zugemessene Kraftstoffmenge derart anzupassen, dass die brennraum-individuellen Drehmomentbeiträge in etwa gleich groß sind. Um in diesem Fall die Genauigkeit der Bestimmung des Verbrennungs-Lambdawert zu erhöhen, werden für jeden Brennraum zwei Laufunruhewerte bestimmt, welche sich durch jeweils eine Verringerung und eine Erhöhung der zugeführten Kraftstoffmenge um denselben Betrag ergeben. Durch die Auswertung der Muster dieser Laufunruhewerte kann dann mit erhöhter Genauigkeit auf den Verbrennungs-Lambdawert rückgeschlossen werden.

In einer Ausgestaltung des Verfahrens nach Anspruch 4 wird ein erster Lambda-Zwischenwert basierend auf den Unterschied zwischen dem ersten und dem zweiten Laufunruhewert ermittelt und ein zweiter Lambda-Zwischenwert basierend auf den Unterschied zwischen dem dritten und dem vierten Laufunruhewert ermittelt. Der Verbrennungs-Lambdawert wird dann basierend auf den ersten Lambda-Zwischenwert und dem zweiten Lambda-Zwischenwert ermittelt.

Analog zu den Ausführungen bezüglich des Anspruchs 2 ergibt sich eine einfachere Bestimmung des Lambdawertes durch die Bestimmung der Unterschiede zwischen den jeweiligen Lambda-Zwischenwerten.

Gemäß einem Ausgestaltungsverfahren nach Anspruch 5 wird der Verbrennungs-Lambdawert als Mittelwert zwischen dem ersten Lambda-Zwischenwert und dem zweiten Lambda-Zwischenwert berechnet.

Diese Ausgestaltung des Verfahrens ermöglicht eine weitere Vereinfachung der Bestimmung des Lambdawerts mit ausreichender Genauigkeit.

Nach einer Ausgestaltung des Verfahrens nach Anspruch 6 erfolgt die Ermittlung des Lambdawertes unter Verwendung zumindest eines Kennfeldes.

Die Verwendung von Kennfeldern zur Ermittlung des Lambdawertes ermöglicht eine Einbindung dieses Verfahrens in eine kennfeldbasierte Motorsteuerung mit geringem Aufwand.

Eine Steuervorrichtung gemäß dem Anspruch 7 ist derart ausgestaltet, dass sie zur Ermittlung des Verbrennungs-Lambdawerts einer Brennkraftmaschine mit mindestens zwei Brennräumen das Verfahren gemäß dem Anspruch 1 ausführen kann.

Bezüglich der Vorteile dieser Steuervorrichtung wird auf die Ausführungen zu Anspruch 1 verwiesen. Die dort genannten Vorteile gelten analog.

Im Folgenden wird die Erfindung anhand von Ausführungsbeispielen mit Bezug auf die beigefügten Figuren näher erläutert. In den Figuren sind:
- Figur 1: eine schematische Darstellung einer Brennkraftma- schine
- Figur 2: ein Diagramm zur Darstellung der Abhängigkeit des produzierten Drehmoments von dem Luft/Kraftstoff- verhältnis
- Figuren 3A-3C: Diagramme zur Darstellung der brennraum-indivi- duellen Laufunruhe bei Variation des Lambdawertes
- Figur 4: ein erstes Ausführungsbeispiel eines Verfahrens in Form eines Ablaufdiagramms
- Figur 5: ein zweites Ausführungsbeispiel eines Verfahrens in Form eines Ablaufdiagramms.

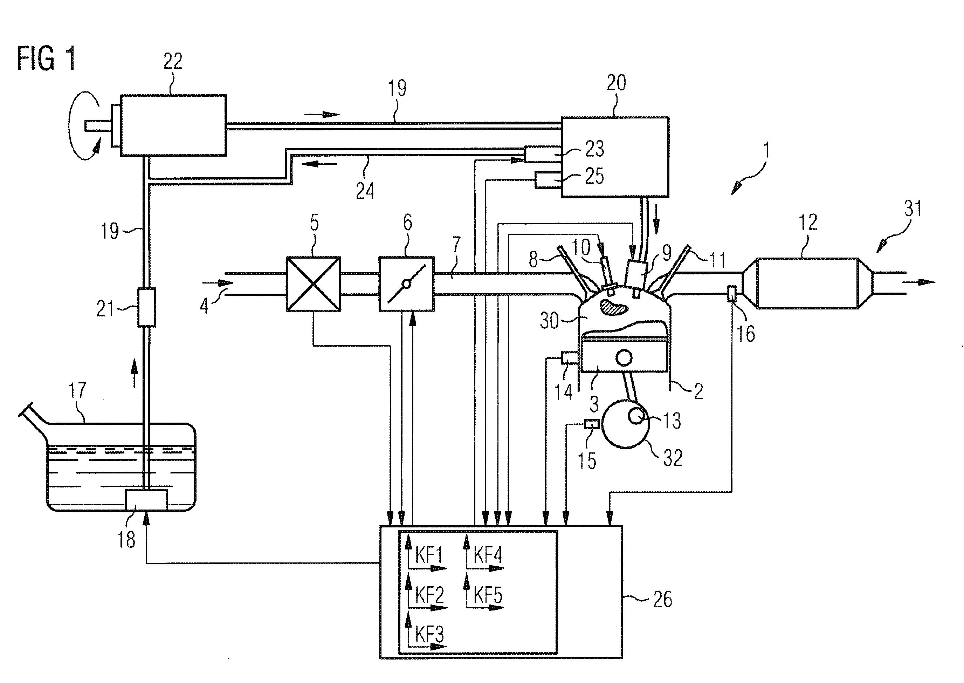

In Figur 1 ist eine Brennkraftmaschine 1 schematisch dargestellt. Aus Gründen der besseren Übersichtlichkeit ist die Darstellung stark vereinfacht ausgeführt.

Die Brennkraftmaschine 1 umfasst eine Mehrzahl von Brennräumen 30, welche jeweils durch einen Zylinder 2 und einen auf und ab bewegbaren Kolben 3 begrenzt sind (in Figur 1 ist aus Gründen der besseren Übersichtlichkeit nur ein Brennraum 30 dargestellt). Die Brennkraftmaschine 1 umfasst ferner einen Ansaugtrakt 7, in dem stromabwärts einer Ansaugöffnung 4 ein Luftmassensensor 5 und eine Drosselklappe 6 angeordnet sind. Die zur Verbrennung nötige Frischluft wird über den Ansaugtrakt 7 in die Brennräume 30 eingeleitet, wobei die Frischluftzufuhr durch Öffnen und Schließen von Einlassventilen 8 gesteuert wird.

Bei der hier dargestellten Brennkraftmaschine 1 handelt es sich um eine Brennkraftmaschine 1 mit Kraftstoffdirekteinspritzung, bei der der für die Verbrennung nötige Kraftstoff über jeweils ein Einspritzventil 9 unmittelbar in den jeweiligen Brennraum 30 eingespritzt wird. Zur Zündung der Verbrennung dient eine ebenfalls in den jeweiligen Brennraum 30 ragende Zündkerze 10. Die Verbrennungsabgase werden über Auslassventile 11 in einen Abgastrakt 31 der Brennkraftmaschine 1 abgeführt und mittels eines im Abgastrakt 31 angeordneten Abgaskatalysators 12 gereinigt.

Die Kraftübertragung an einen Antriebsstrang eines Kraftfahrzeugs (nicht dargestellt) geschieht über eine mit dem Kolben 3 gekoppelte Kurbelwelle 13. Die Brennkraftmaschine 1 verfügt ferner über einen Brennraumdrucksensor 14, einen Drehzahlsensor 15 zur Erfassung der Drehzahl der Kurbelwelle 13 sowie einen Abgastemperatursensor 16 zur Erfassung der Abgastemperatur.

Der Brennkraftmaschine 1 ist ein Kraftstoffversorgungssystem zugeordnet, welches einen Kraftstofftank 17 sowie eine darin angeordnete Kraftstoffpumpe 18 aufweist. Der Kraftstoff wird mittels der Kraftstoffpumpe 18 über eine Versorgungsleitung 19 einem Druckspeicher 20 zugeführt. Dabei handelt es sich um einen gemeinsamen Druckspeicher 20, von dem aus die Einspritzventile 9 für mehrere Brennräume 30 mit druckbeaufschlagtem Kraftstoff versorgt werden. In der Versorgungsleitung 19 sind ferner ein Kraftstofffilter 21 und eine Hochdruckpumpe 22 angeordnet. Die Hochdruckpumpe 22 dient dazu, den durch die Kraftstoffpumpe 18 mit relativ niedrigem Druck (ca. 3 Bar) geförderten Kraftstoff dem Druckspeicher 20 mit hohem Druck zuzuführen (bei einem Ottomotor typischerweise bis zu 150 bar). Die Hochdruckpumpe 22 wird dabei mittels eines eigenen Antriebs (nicht dargestellt), beispielsweise eines Elektromotors, oder durch entsprechende Koppelung mit der Kurbelwelle 13 angetrieben. Zur Steuerung des Drucks im Druckspeicher 20 ist an diesem ein Druckeinstellmittel 23, beispielsweise ein Drucksteuerventil oder ein Mengensteuerventil angeordnet, über welches der in dem Druckspeicher 20 befindliche Kraftstoff über eine Rückflussleitung 24 in die Versorgungsleitung 19 bzw. den Kraftstofftank 17 zurückfließen kann. Zur Überwachung des Drucks im Druckspeicher 20 ist ferner ein Drucksensor 25 vorgesehen.

Der Brennkraftmaschine 1 ist eine Steuervorrichtung 26 zugeordnet, welche über Signal- und Datenleitungen mit allen Aktuatoren und Sensoren verbunden ist. In der Steuervorrichtung 26 sind kennfeldbasierte Motorsteuerungsfunktionen (KF1 bis KF5) softwaremäßig implementiert. Basierend auf den Messwerten der Sensoren und den kennfeldbasierten Motorsteuerungsfunktionen werden Steuersignale an die Aktuatoren der Brennkraftmaschine 1 und des Kraftstoffversorgungssystems ausgesendet. So ist die Steuervorrichtung 26 über die Daten- und Signalleitungen mit der Kraftstoffpumpe 18, dem Druckeinstellmittel 23, dem Drucksensor 25, dem Luftmassensensor 5, der Drosselklappe 6, der Zündkerze 10, dem Einspritzventil 9, dem Brennraumdrucksensor 14, dem Drehzahlsensor 15 und dem Abgastemperatursensor 16 gekoppelt.

Die Steuervorrichtung 26 ermittelt anhand des Signals des Drehzahlsensors 15 und/oder des Brennraumdrucksensors 14 für jeden der Brennräume 30 einen brennraum-individuellen Laufunruhewert ER, welcher ein Maß für die Laufunruhe des jeweiligen Brennraums darstellt.

Bei Verwendung des Signals des Brennraumdrucksensors 14 kann beispielsweise der Druckverlauf in einem der Brennräume 30 mit dem Druckverlauf in den anderen Brennräumen 30 verglichen werden, um so durch geeignete weiterführende mathematische Operationen zu einem Laufunruhewert ER zu gelangen.

Eine andere Vorgehensweise ergibt sich bei Verwendung des Signals des Drehzahlsensors 15. Der Drehzahlsensor 15 tastet ein mit der Kurbelwelle 13 gekoppelte Geberrad 32 ab. Dabei ist jedem Brennraum 30 ein bestimmter Sektor auf dem Geberrad 32 zugeordnet. Mittels des Drehzahlsensors 15 berechnet die Steuervorrichtung 26 die Drehgeschwindigkeit des Geberrades 32 und wertet diese individuell für die brennraumspezifischen Sektoren aus. Die Geschwindigkeit, mit welcher sich die Sektoren an dem Drehzahlsensor 15 vorbeibewegen, stellt ein Maß für den Drehmomentbeitrag TQ des jeweiligen Brennraums 30 dar. Durch Vergleich der Geschwindigkeiten, mit denen die brennraum-spezifischen Sektoren des Geberrads 32 den Drehzahlsensor 15 passieren mit einem Mittelwert dieser Geschwindigkeiten kann für jeden Brennraum 30 ein individueller Laufunruhewert ER berechnet werden. Die einzelnen Laufunruhewerte ER stellen daher ein Maß für den Drehmomentbeitrag TQ des jeweiligen Brennraums 30 dar. An dieser Stelle wird auch auf EP 0 576 705 A1 verwiesen, in der ein Verfahren zur Bestimmung der Laufunruhe detailliert beschrieben ist.

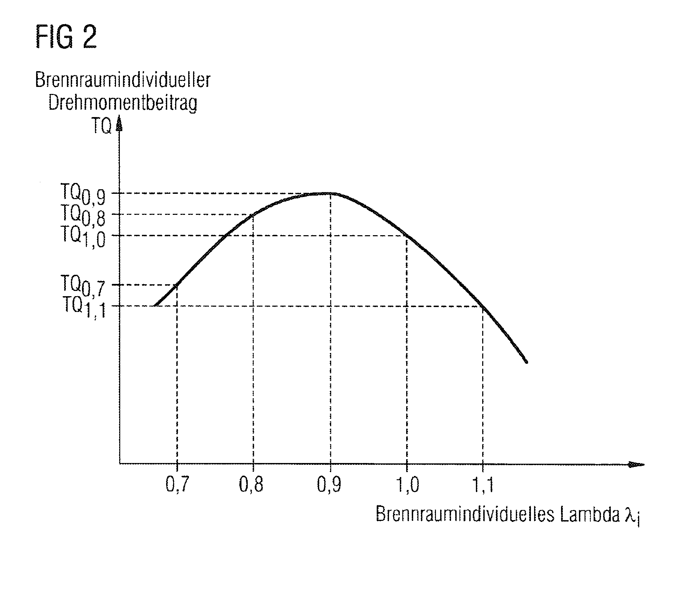

In Figur 2 ist der brennraum-individuelle Drehmomentbeitrag TQ in Abhängigkeit vom brennraum-individuellen Luft/Kraftstoffverhältnis, kurz als λi bezeichnet, schematisch dargestellt. Wie zu erkennen ist, erreicht der brennraum-individuelle Drehmomentbeitrag TQ bei ca. λi=0,9 sein Maximum. Das produzierte Drehmoment TQ nimmt sowohl bei weiterer Anfettung, d.h. einer Verschiebung in Richtung niedrigerer Lambdawerte, sowie bei weiterer Abmagerung, d.h. einer Verschiebung in Richtung größerer Lambdawerte, ab.

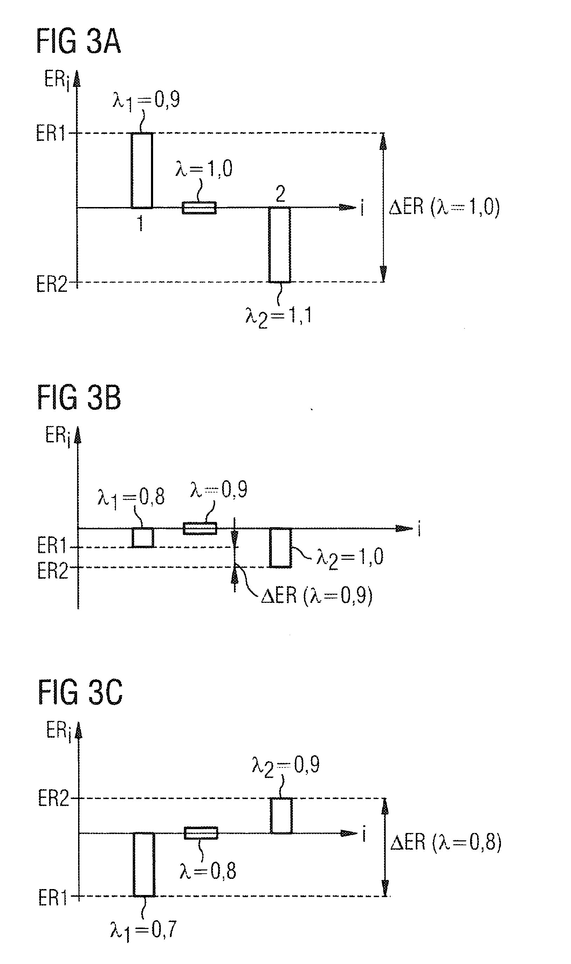

Der Erfindung liegt nun die Idee zugrunde, dass der Verbrennungs-Lambdawert λ des Abgases einer Brennkraftmaschine 1 basierend auf den Laufunruhewerten ER1, ER2 zweier Brennräume ermittelt werden kann. Wie dies funktioniert, soll anhand der Figuren 3A bis 3C in Verbindung mit Figur 2 näher erläutert werden.

Aus Figur 2 wird deutlich, dass der brennraum-individuelle Drehmomentbeitrag TQ durch Änderung der dem Brennraum 30 zugemessenen Kraftstoffmenge MFF und der damit verbundenen Änderung des brennraum-individuellen Luft/Kraftstoffverhältnisses λi beeinflusst werden.

Ausgegangen wird beispielsweise von einer in Figur 1 dargestellten Brennkraftmaschine mit vier Brennräumen 30, welche an einem stationären Betriebspunkt betrieben wird. Ein Betriebspunkt wird dann als stationär angesehen, wenn das von der Brennkraftmaschine 1 abgegebene Drehmoment über einen vorgegebenen Zeitraum innerhalb eines vorgegebenen Toleranzbandes liegt. Insbesondere sollten dabei die Drehzahl, die der Brennkraftmaschine 1 zugeführte. Frischluftmasse sowie die Zündzeitpunkte für die Brennräume im Wesentlichen konstant sein. Den vier Brennräumen 30 wird jeweils eine bestimmte brennraum-individuelle Kraftstoffmenge zugemessen. Dadurch ergibt sich für jeden Brennraum 30 ein bestimmtes brennraum-individuelles Luft/Kraftstoffverhältnis λi und durch die Verbrennung ein bestimmter (zunächst unbekannter) Verbrennungs-Lambdawert λ. Wird nun die Kraftstoffmenge eines Brennraums 30 um einen bestimmten Betrag verringert und die Kraftstoffmenge eines anderen Brennraums um denselben Betrag vergrößert, so bleibt zwar der Verbrennungs-Lambdawert λ im Wesentlichen konstant, jedoch ändert sich das brennraum-individuelle Luft/Kraftstoffverhältnis λi und der brennraum-individuelle Drehmomentbeitrag TQ dieser beiden Brennräume. Dies führt zu einer Änderung des von der Steuervorrichtung 26 ermittelten brennraum-individuellen Laufunruhewerts ERi.

Bei der oben beschriebenen Vorgehensweise ergeben sich für verschiedene Lambdawerte λ des Abgases die in den Figuren 3A bis 3C dargestellten brennraum-individuellen Laufunruhewerte ERi für die zwei Brennräume (i=1 und i=2).

In Figur 3A sind die resultierenden brennraum-individuellen Laufunruhewerte ERi bei einem Verbrennungs-Lambdawert λ von 1,0 dargestellt. Die Kraftstoffmenge des ersten Brennraums (i=1) wurde um den Betrag ΔMFF erhöht, sodass sich ein brennraum-individuelles Luft/Kraftstoffverhältnis λ1 von 0,9 einstellt. Durch die Verringerung der Kraftstoffmenge des zweiten Brennraums (i=2) um denselben Betrag ΔMFF ergibt sich dort ein brennraum-individuelles Luft/Kraftstoffverhältnis λ1 von 1,1. Wie unter Verweis auf Figur 2 deutlich wird, vergrößert sich dadurch der brennraum-individuelle Drehmomentbeitrag TQ des ersten Brennraums, während sich der brennraum-individuelle Drehmomentbeitrag TQ des zweiten Brennraums verringert. Dadurch ergibt sich ein größerer Laufunruhewert ER1 des ersten Brennraums und ein geringerer Laufunruhewert ER2 des zweiten Brennraums. Der Unterschied zwischen dem Laufunruhewert ER1 und dem Laufunruhewert ER2 ist in diesem Fall ΔER(λ=1,0).

Bei einem Verbrennungs-Lambdawert λ von 0,9 und 0,8 ergeben sich, bei gleicher Vorgehensweise, die in den Figuren 3B und 3C dargestellten Laufunruhewerte ER1 und ER2 und die daraus resultierenden Unterschiede ΔER(λ=0,9) und ΔER(λ=0,8), welche sich betragsmäßig voneinander unterscheiden.

Allgemein wird aus den Figuren 3A bis 3C deutlich, dass sich für einen bestimmten Verbrennungs-Lambdawerts λ ein charakteristisches Muster der Laufunruhewerte ER1 und ER2 bzw. einen charakteristischen Betrag für den Unterschied ΔER ergibt. Daher kann im Umkehrschluss von diesen charakteristischen Mustern bzw. Unterschieden ΔER auf den Verbrennungs-Lambdawert λ des Abgases geschlossen werden. Der Zusammenhang zwischen dem Unterschied ΔER und dem Verbrennungs-Lambdawert λ kann beispielsweise als Kennfeld in der Steuervorrichtung 26 abgespeichert sein.

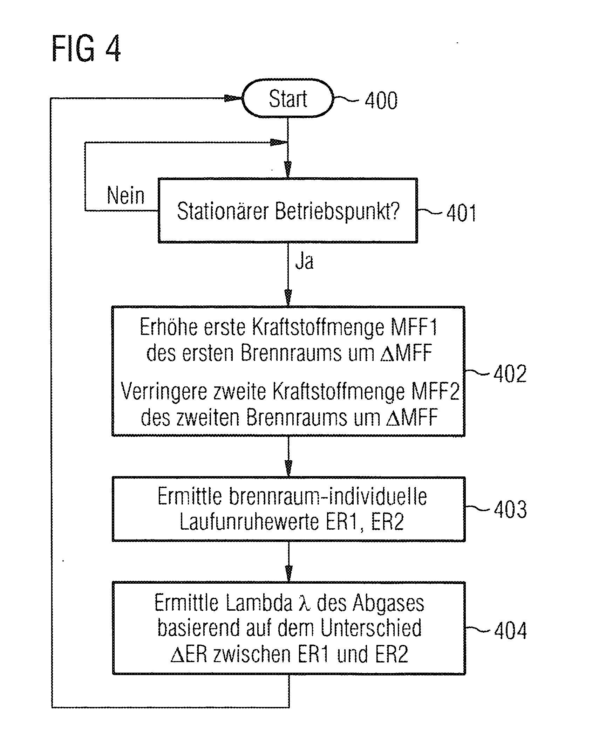

In Figur 4 ist eine erste Ausgestaltung eines Verfahren zur Bestimmung des Verbrennungs-Lambdawerts λ der Brennkraftmaschine 1 in Form eines Ablaufdiagramms dargestellt.

Das Verfahren wird im Schritt 400, beispielsweise beim Anlassen der Brennkraftmaschine 1, gestartet. Im Schritt 401 wird überprüft, ob sich die Brennkraftmaschine 1 in einem stationären Betriebspunkt befindet. Bei einem stationären Betriebspunkt wird jedem der Brennräume 30 mittels der Einspritzventile 9 eine vorgegebene Kraftstoffmenge MFF zugeführt. Die Abfrage im Schritt 401 wird solange wiederholt, bis ein stationärer Betriebspunkt erkannt wird.

Im Schritt 402 wird eine brennraum-individuelle erste Kraftstoffmenge MFF1 eines ersten Brennraums um einen vorgegebenen Betrag ΔMFF erhöht. Gleichzeitig wird eine zweite Kraftstoffmenge MFF2 eines zweiten Brennraums, um denselben Betrag ΔMFF verringert. Dabei bleiben die den Brennräumen 30 zugeführte Gesamtkraftstoffmenge MFF und damit der Verbrennungs-Lambdawert λ unverändert. Durch die Erhöhung bzw. die Verringerung der individuellen Kraftstoffmengen MFF1, MFF2 für den ersten und zweiten Brennraum ändert sich auch der brennraum-individuelle Lambdawert λ1, λ2 für diese Brennräume. Wie anhand der Figur 2 schon erläutert wurde, ändert sich damit auch der brennraum-individuelle Drehmomentbeitrag bzw. das in diesen Brennräumen jeweils produzierte Drehmoment. Diese Veränderung der brennraum-individuellen Drehmomentbeiträge des ersten und zweiten Brennraums wird von dem Drehzahlsensor 15 erfasst. Das Signal des Drehzahlsensors 15 wird von der Steuervorrichtung verwendet, um im Schritt 403 für den ersten und zweiten Brennraum jeweils einen Laufunruhewert ER1, ER2 zu berechnen.

Im Schritt 404 wird der Verbrennungs-Lambdawert λ basierend auf dem Unterschied bzw. der Differenz ΔER zwischen dem ersten Laufunruhewert ER1 und dem zweiten Laufunruhewert ER2 ermittelt. Dies geschieht beispielsweise mittels eines Kennfeldes, welches den Zusammenhang zwischen der Differenz ΔR und dem Verbrennungs-Lambdawert λ für diesen Betriebspunkt wiedergibt. Das Kennfeld kann auch als mehrdimensionales Kennfeld ausgebildet sein, wobei er Zusammenhang zwischen dem Verbrennungs-Lambdawert λ und dem Unterschied ΔER für eine Vielzahl von Betriebspunkten der Brennkraftmaschine 1 aufgetragen ist.

Nach Ermittlung des Verbrennungs-Lambdawerts λ kann das Verfahren mit Schritt 400 neu gestartet werden.

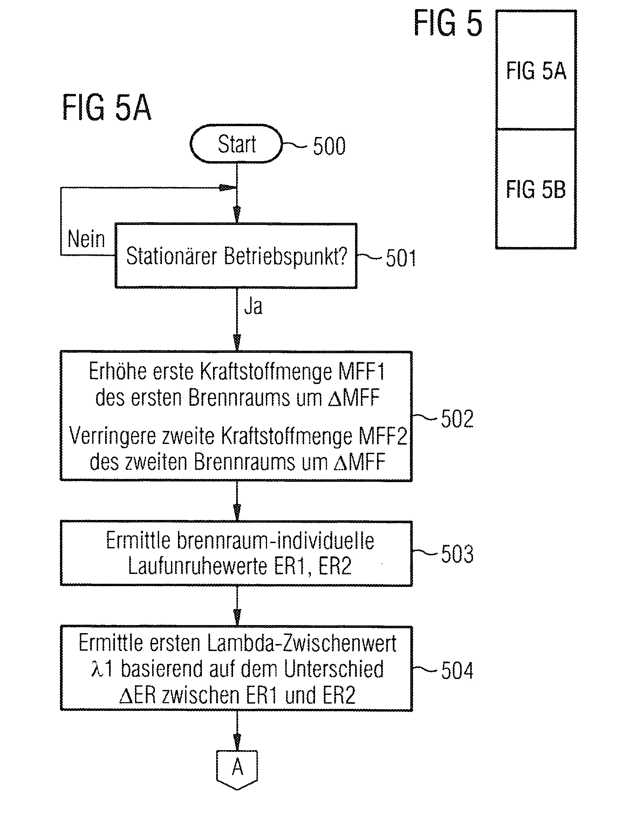

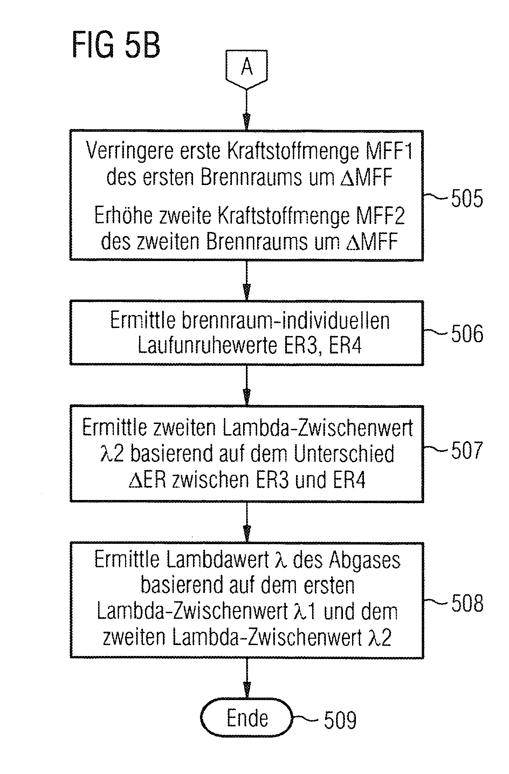

Eine weitere Ausgestaltung des Verfahrens ist in Figur 5 dargestellt. Diese Ausgestaltung erweist sich als besonders vorteilhaft, falls die Brennkraftmaschine 1 mit einem Kraftstoffmengenausgleich betrieben wird. Ziel des Kraftstoffmengenausgleichs ist es, die individuellen Drehmomentbeiträge TQ der einzelnen Brennräume 30 zu nivellieren. Dies verbessert die Laufruhe der Brennkraftmaschine 1 und führt zu einer gleichmäßigeren Belastung und einem gleichmäßigerem Verschleiß der Brennkraftmaschine 1. Das Grundprinzip des Kraftstoffmengenausgleichs besteht darin, über die Auswertung des Signals des Drehzahlsensors 15, die Drehmomentbeiträge TQ der einzelnen Brennräume 30 zu ermitteln. Eine Nivellierung dieser Drehmomentbeiträge kann durch entsprechende Dosierung der den Brennräumen 30 zugeführten Kraftstoffmengen realisiert werden. Wird zum Beispiel festgestellt, dass einer der Brennräume ein geringeres Drehmoment erzeugt als der Mittelwert der Drehmomentbeiträge der anderen Brennräume, so wird durch eine entsprechende Erhöhung der ihm zugeführten Kraftstoffmenge ein fetteres Gemisch erzeugt, was die Drehmomentabgabe erhöht. Analog kann das Drehmoment auch reduziert werden, indem die Kraftstoffmenge des jeweiligen Brennraums vermindert wird. Schlussendlich führt der Kraftstoffmengenausgleich dazu, dass die einzelnen Brennräume 30 mit unterschiedlich großen Kraftstoffmengen versorgt werden.

Die Ausgestaltung des Verfahrens nach Figur 5 dient nun dazu, die Genauigkeit bei der Ermittlung des Verbrennungs-Lambdawerts λ im Falle einer Brennkraftmaschine 1 mit Kraftstoffmengenausgleich zu verbessern. Die Schritte 500 bis 504 entsprechen den Schritten 400 bis 404 des Ausführungsbeispiels der Figur 4. Als einziger Unterschied wird der im Schritt 504 ermittelte Lambdawert nicht als das Endergebnis betrachtet sondern als Lambda-Zwischenwert λ1 betrachtet und abgespeichert.

Im darauffolgenden Schritt 505 wird die Kraftstoffmenge MFF1 des ersten Brennraums um den vorgegebenen Betrag ΔMFF verringert. Gleichzeitig wird die zweite Kraftstoffmenge MFF2 des zweiten Brennraums um denselben Betrag ΔMFF erhöht. Die Variation der zugeführten Kraftstoffmengen MFF1, MFF2 wird daher im Vergleich zu Schritt 502 umgekehrt.

Im Schritt 506 werden erneut die brennraum-individuellen Laufunruhewerte ER3 und ER4 ermittelt. Dies geschieht auf analoge Weise, wie schon in den Schritten 503 und 403. Im Schritt 507 wird ein zweiter Lambda-Zwischenwert λ2 basierend auf den Unterschied ΔER zwischen dem Brennraum individuellen Laufunruhewerten ER3 und ER4 ermittelt. Analog zu den Schritten 504 und 404 geschieht dies wiederum anhand eines Kennfeldes.

Im Schritt 508 wird der Verbrennungs-Lambdawert λ basierend auf den ersten Lambda-Zwischenwert λ1 und dem zweiten Lambda-Zwischenwert λ2 ermittelt. Dies kann beispielsweise durch Bildung des arithmetischen Mittels erfolgen. Das Verfahren kann im Schritt 509 entweder beendet oder alternativ von neuem gestartet werden.

Durch die Umkehrung der Variation der dem ersten und zweiten Brennraum zugeführten Kraftstoffmengen MFF1, MFF2 und der Ermittlung zweier Lambda-Zwischenwerte λ1, λ2 kann die Genauigkeit des ermittelten Verbrennungs-Lambdawerts λ deutlich erhöht werden.

Auch wenn in den Ausführungsbeispielen des Verfahrens gemäß der Figuren 3 und 4 der Verbrennungs-Lambdawert λ basierend auf den Laufunruhewerten von zwei Brennräumen ermittelt wird, so kann zur weiteren Steigerung der Genauigkeit des Verfahrens, Laufunruhewerte für verschiedene Paare von Brennräumen der Brennkraftmaschine ermittelt und daraus, zum Beispiel durch Bildung eines Mittelwertes, der letztendliche Verbrennungs-Lambdawert λ berechnet werden.

## Patentansprüche

1. Verfahren zur Ermittlung des Verbrennungs-Lambdawerts (λ) einer Brennkraftmaschine (1) mit mindestens zwei Brennräumen (30), wobei
- dem ersten Brennraum eine vorgegebene erste Kraftstoffmenge (MFF1) und dem zweiten Brennraum eine vorgegebene zweite Kraftstoffmenge (MFF2) zugemessen werden,
- die erste Kraftstoffmenge (MFF1) um einen vorgegebenen Betrag (ΔMFF) verringert wird und die zweite Kraftstoffmenge (MFF2) um den gleichen vorgegebenen Betrag (ΔMFF) erhöht wird,
- ein erster Laufunruhewert (ER1), welcher dem ersten Brennraum zugeordnet ist, und ein zweiter Laufunruhewert (ER2), welcher dem zweiten Brennraum zugeordnet ist, ermittelt werden,
- der Verbrennungs-Lambdawert (λ) basierend auf dem ersten Laufunruhewert (ER1) und dem zweiten Laufunruhewert (ER2) ermittelt wird.

2. Verfahren nach Anspruch 1, wobei der Verbrennungs-Lambdawert (λ) des Abgases basierend auf dem Unterschied (ΔER) zwischen dem ersten Laufunruhewert (ER1) und dem zweiten Laufunruhewert (ER2) ermittelt wird.

3. Verfahren nach Anspruch 1, wobei nach Ermittlung des ersten Laufunruhewerts (ER1) und des zweiten Laufunruhewerts (ER2)
- die erste Kraftstoffmenge (MFF1) um den vorgegebenen Betrag (ΔMFF) erhöht wird und die zweite Kraftstoffmenge (ER2) um den vorgegebenen Betrag (ΔMFF) verringert wird,
- ein dritter Laufunruhewert (ER3), welcher dem ersten Brennraum zugeordnet ist, und ein vierter Laufunruhewert (ER4), welcher dem zweiten Brennraum zugeordnet ist, ermittelt werden,
- der Verbrennungs-Lambdawert (λ) basierend auf dem ersten Laufunruhewert (ER1), dem zweiten Laufunruhewert (ER2), dem dritten Laufunruhewert (ER3) und dem vierten Laufunruhewert (ER4) ermittelt wird.

4. Verfahren nach Anspruch 3, wobei
- ein erster Lambda-Zwischenwert (λ1) basierend auf dem Unterschied (ΔER) zwischen dem ersten und dem zweiten Laufunruhewert (ER1, ER2) ermittelt wird,
- ein zweiter Lambda-Zwischenwert basierend auf dem Unterschied (ΔER) zwischen dem dritten und dem vierten Laufunruhewert (ER3, ER4) ermittelt wird, und
- der Verbrennungs-Lambdawert (λ) basierend auf dem ersten Lambda-Zwischenwert (λ1) und dem zweiten Lambda-Zwischenwert (λ2) ermittelt wird.

5. Verfahren nach Anspruch 4, wobei der Lambdawert (λ) des Abgases als Mittelwert zwischen dem ersten Lambda-Zwischenwert (λ1) und dem zweiten Lambda-Zwischenwert berechnet (λ2) wird.

6. Verfahren nach einem der Ansprüche 1 bis 4, wobei die Ermittlung des Verbrennungs-Lambdawert (λ) unter Verwendung zumindest eines Kennfeldes erfolgt.

7. Steuervorrichtung (26) für eine Brennkraftmaschine (1) mit mindestens zwei Brennräumen (30), wobei die Steuervorrichtung (26) derart ausgebildet ist, dass zur Ermittlung des Verbrennungs-Lambdawert (λ) der Brennkraftmaschine (1)
- einem ersten Brennraum eine vorgegebene erste Kraftstoffmenge (MFF1) und dem zweiten Brennraum eine vorgegebene zweite Kraftstoffmenge (MFF2) zugemessen werden,
- die erste Kraftstoffmenge (MFF1) um einen vorgegebenen Betrag (ΔMFF) verringert wird und die zweite Kraftstoffmenge (MFF2) um den gleichen vorgegebenen Betrag (ΔMFF) erhöht wird,
- ein erster Laufunruhewert (ER1), welcher dem ersten Brennraum zugeordnet ist, und ein zweiter Laufunruhewert (ER2), welcher dem zweiten Brennraum zugeordnet ist, ermittelt wird,
- der Verbrennungs-Lambdawert (λ) basierend auf dem ersten Laufunruhewert (ER1) und dem zweiten Laufunruhewert (ER2) ermittelt wird.

## Claims

1. Method for determining the combustion Lambda value (λ) of an internal combustion engine (1) with at least two combustion chambers (30), with
- a predetermined first fuel quantity (MFF1) being metered to the first combustion chamber and a predetermined second fuel quantity (MFF2) being metered to the second combustion chamber,
- the first fuel quantity (MFF1) being reduced by a predetermined amount (ΔMFF) and the second fuel quantity (MFF2) being increased by the same predetermined amount (λMFF),
- a first uneven running value (ER1), which is assigned to the first combustion chamber, and a second uneven running value (ER2), which is assigned to the second combustion chamber, being determined,
- the combustion Lambda value (λ) being determined on the basis of the first uneven running value (ER1) and the second uneven running value (ER2).

2. The method according to claim 1, with the combustion Lambda value (λ) of the exhaust gas being determined on the basis of the difference (ΔER) between the first uneven running value (ER1) and the second uneven running value (ER2).

3. The method according to claim 1 with, after determination of the first uneven running value (ER1) and of the second uneven running value (ER2),
- the first fuel quantity (MFF1) being increased by the predetermined amount (ΔMFF) and the second fuel quantity (ER2) being reduced by the predetermined amount (ΔMFF),
- a third uneven running value (ER3), which is assigned to the first combustion chamber, and a fourth uneven running value (ER4), which is assigned to the second combustion chamber, being determined,
- the combustion Lambda value (λ) being determined on the basis of the first uneven running value (ER1), the second uneven running value (ER2), the third uneven running value (ER3) and the fourth uneven running value (ER4),

4. The method according to claim 3, with
- a first intermediate Lambda value (λ1) being determined on the basis of the difference (ΔER) between the first and the second uneven running value (ER1, ER2),
- a second intermediate Lambda value being determined on the basis of the difference (ΔER) between the third and the fourth uneven running value, and
- the combustion Lambda value (λ) being determined on the basis of the first intermediate Lambda value (λ1) and the second intermediate Lambda value (λ2).

5. The method according to claim 4, with the Lambda value(λ) of the exhaust gas being calculated as the average value between the first intermediate Lambda value (λ1) and the second intermediate Lambda value (λ2).

6. The method according to one of claims 1 to 4, with the Lambda combustion value (λ) being determined using at least one engine map.

7. Control device (26) for an internal combustion engine (1) with at least two combustion chambers (30), with the control device (26) being embodied such that, for determining the combustion Lambda value (λ) of the internal combustion engine (1),
- a predetermined first fuel quantity (MFF1) is metered to a first combustion chamber and a predetermined second fuel quantity (MFF2) is metered to a second combustion chamber,
- the first fuel quantity (MFF1) is reduced by a predetermined amount (ΔMFF) and the second fuel quantity (MFF2) is increased by the same predetermined amount (ΔMFF) ,
- a first uneven running value (ER1), which is assigned to the first combustion chamber, and a second uneven running value (ER2), which is assigned to the second combustion chamber, are determined,
- the combustion Lambda value (λ) is determined on the basis of the first uneven running value (ER1) and the second uneven running value (ER2).

## Revendications

1. Procédé de détermination de la valeur de combustion lambda (λ) d'un moteur à combustion interne (1) comportant au moins deux chambres de combustion (30), dans lequel:
- une première quantité de carburant (MFF1) prédéfinie est affectée à la première chambre de combustion et une deuxième quantité de carburant (MFF2) prédéfinie est affectée à la deuxième chambre de combustion,
- la première quantité de carburant (MFF1) est diminuée d'une valeur (ΔMFF) prédéfinie et la deuxième quantité de carburant (MFF2) est augmentée de la même valeur (ΔMFF) prédéfinie,
- une première valeur de marche irrégulière (ER1), qui est associée à la première chambre de combustion, et une deuxième valeur de marche irrégulière (ER2), qui est associée à la deuxième chambre de combustion, sont déterminées,
- la valeur de combustion lambda (λ) est déterminée sur la base de la première valeur de marche irrégulière (ER1) et de la deuxième valeur de marche irrégulière (ER2).

2. Procédé selon la revendication 1, dans lequel la valeur de combustion lambda (λ) du gaz d'échappement est déterminée sur la base de la différence (ΔER) entre la première valeur de marche irrégulière (ER1) et la deuxième valeur de marche irrégulière (ER2).

3. Procédé selon la revendication 1, dans lequel, après la détermination de la première valeur de marche irrégulière (ER1) et de la deuxième valeur de marche irrégulière (ER2),
- la première quantité de carburant (MFF1) est augmentée de la valeur (ΔMFF) prédéfinie, et la deuxième quantité de carburant (ER2) est diminuée de la valeur (ΔMFF) prédéfinie,
- une troisième valeur de marche irrégulière (ER3), qui est associée à la première chambre de combustion, et une quatrième valeur de marche irrégulière (ER4), qui est associée à la deuxième chambre de combustion, sont déterminées,
- la valeur de combustion lambda (λ) est déterminée sur la base de la première valeur de marche irrégulière (ER1), de la deuxième valeur de marche irrégulière (ER2), de la troisième valeur de marche irrégulière (ER3) et de la quatrième valeur de marche irrégulière (ER4).

4. Procédé selon la revendication 3, dans lequel
- une première valeur intermédiaire lambda (λ1) est déterminée sur la base de la différence (λER) entre la première et la deuxième valeur de marche irrégulière (ER1, ER2),
- une deuxième valeur intermédiaire lambda est déterminée sur la base de la différence (λER) entre la troisième et la quatrième valeur de marche irrégulière (ER3, ER4), et
- la valeur de combustion lambda (λ) est déterminée sur la base de la première valeur intermédiaire lambda (λ1) et de la deuxième valeur intermédiaire lambda (λ2).

5. Procédé selon la revendication 4, dans lequel la valeur lambda (λ) du gaz d'échappement est calculée en tant que valeur moyenne entre la première valeur intermédiaire lambda (λ1) et la deuxième valeur intermédiaire lambda (λ2).

6. Procédé selon l'une quelconque des revendications 1 à 4, dans lequel la détermination de la valeur de combustion lambda (λ) est effectuée moyennant l'utilisation d'au moins un diagramme caractéristique.

7. Dispositif de commande (26) pour un moteur à combustion interne (1) avec au moins deux chambres de combustion (30), le dispositif de commande (26) étant configuré de telle sorte que pour déterminer la valeur de combustion lambda (λ) du moteur à combustion interne :
- une première quantité de carburant (MFF1) prédéfinie est affectée à une première chambre de combustion et une deuxième quantité de carburant (MFF2) prédéfinie est affectée à la deuxième chambre de combustion,
- la première quantité de carburant (MFF1) est diminuée d'une valeur (ΔMFF) prédéfinie et la deuxième quantité de carburant (MFF2) est augmentée de la même valeur (ΔMFF) prédéfinie,
- une première valeur de marche irrégulière (ER1), qui est associée à la première chambre de combustion, et une deuxième valeur de marche irrégulière (ER2) qui est associée à la deuxième chambre de combustion, sont déterminées,
- la valeur de combustion lambda (λ) est déterminée sur la base de la première valeur de marche irrégulière (ER1) et de la deuxième valeur de marche irrégulière (ER2).
